# EUROPEAN PATENT APPLICATION

(11) **EP 3 926 365 A1**
(43) Date of publication of application: **22.12.2021**
(21) Application number: 19918837.6
(22) Date of filing: 23.10.2019
(51) Int. Cl.: G01S 17/08, G01S 17/93

(54) **DETECTION ASSEMBLY, ROBOTIC VACUUM CLEANER, AND WALKING FLOOR STATUS DETECTION METHOD AND CONTROL METHOD FOR ROBOTIC VACUUM CLEANER**

(30) Priority: 11.03.2019 CN 201910182094; 12.03.2019 CN 201910186507
(71) Applicant: Midea Robozone Technology Co., Ltd., Suzhou, Jiangsu 215131 (CN)
(72) Inventor: CHEN, Yuan, Suzhou, Jiangsu 215131 (CN); XU, Xiaowei, Suzhou, Jiangsu 215131 (CN); CHEN, Linghua, Suzhou, Jiangsu 215131 (CN); WEI, Xianmin, Suzhou, Jiangsu 215131 (CN); LI, Shijie, Suzhou, Jiangsu 215131 (CN); LU, Yuan, Suzhou, Jiangsu 215131 (CN)
(74) Representative: RGTH
(86) International application number: PCT/CN2019/112730
(87) International publication number: WO 2020/181772

(57) **Abstract**

A detection assembly, a robotic vacuum cleaner, a walking floor status detection method and a control method are provided. The detection assembly includes: a plurality of optical transmitter (1), one optical receiver (2) and an assembly body (3). The optical transmitters (1) and the optical receiver (2) are all mounted on the assembly body (3), and the plurality of optical transmitters (1), the one receiver (2) and the assembly body (3) are integrated into one piece.

## Description

### CROSS-REFERENCE TO RELATED APPLICATION

The disclosure claims priority to and benefits of Chinese Patent Application Serial No. 201910182094.1, filed with China National Intellectual Property Administration on March 11, 2019, and Chinese Patent Application Serial No. 201910186507.3, filed with China National Intellectual Property Administration on March 12, 2019, the entire content of which are incorporated herein by reference.

### FIELD

The present application relates to the field of robotic vacuum cleaners, and more particularly to a detection assembly for a robotic vacuum cleaner, a robotic vacuum cleaner, a walking floor status detection method for a robotic vacuum cleaner, and a control method for a robotic vacuum cleaner.

### BACKGROUND

With development of technologies, robotic vacuum cleaners as cleaning machines enter thousands of households. However, intelligence of robotic vacuum cleaners is still limited. For example, they cannot avoid obstacles in home intelligently, and usually perform obstacle avoidance through perception after collision, thus damage to furniture, vases, etc. often occurs, bringing some troubles to consumers.

In related art, some manufactures contrast indoor obstacles through ultrasonic sensors, infrared sensors, collision switches, lidars and visions. However, following technical problems exist in the related art: (1) ultrasonic sensors: they are greatly affected by temperature and humidity, and have low measurement accuracy; (2) lidars: single-point lasers have a small measurement range and a poor electric motor; (3) infrared sensors: they are greatly affected by light, have narrow beam angle and a small measurement range; (4) collision switches: they employ contact measurement, and easily cause damage to robotic vacuum cleaners and indoor household items. (5) monocular vision cannot measure depth information of obstacles; (6) binocular vision has complex calculations and poor real-time ability; (7) depth cameras have small field of view and a narrow measurement range.

### SUMMARY

The present application seeks to solve at least one of the problems existing in the related art to at least some extent.

In view of this, the present application proposes a detection assembly for a robotic vacuum cleaner which can perform distance measurement by measuring time difference between photon transmission and reception, and will not be affected by light dissipation intensity like infrared.

A second aspect of the present application proposes a robotic vacuum cleaner.

A third aspect of the present application proposes a method for detecting walking floor status of the above-described robotic vacuum cleaner.

A fourth aspect of the present application proposes a method for controlling the above-described robotic vacuum cleaner.

A detection assembly for a robotic vacuum cleaner according to the first aspect of the present application includes a plurality of optical transmitters, one optical receiver and a detection assembly body. The optical transmitters and the optical receiver are all mounted on the detection assembly body, and the plurality of optical transmitters, the one optical receiver and the detection assembly body are integrated into one piece.

The detection assembly for the robotic vacuum cleaner according to embodiments of the present application performs distance measurement by measuring time difference between photon transmission and reception, and will not be affected by light dissipation intensity like infrared.

Additionally, the detection assembly for the robotic vacuum cleaner according to embodiments of the present application may further have the following additional technical features.

According an example of the present application, the optical transmitters and the optical receiver each employs a time of flight sensor and/or an optical tracing sensor.

According an example of the present application, the plurality of optical transmitters are located on a same horizontal plane, the optical receiver and the optical transmitters are not located on a same horizontal plane, and the optical receiver is located at a middle area between the optical transmitter located at a left extreme position and the optical transmitter located at a right extreme position.

According an example of the present application, the detection assembly further includes a plurality of charging alignment devices also integrated on the detection assembly body.

According an example of the present application, the charging alignment devices and the optical transmitters are not located on a same horizontal plane.

According an example of the present application, a relative distance between two adjacent optical transmitters is less than 50mm.

According an example of the present application, a normal angle between two adjacent optical transmitters is greater than 0°and less than 90°.

A robotic vacuum cleaner according to the second aspect of the present application includes a machine body and a walking floor status detection system. The walking floor status detection system includes a detection assembly according to the first aspect of the present application, the detection assembly being located at a front part of the machine body of the robotic vacuum cleaner; a detection circuit electrically coupled to the optical receiver, to calculate and process an electrical signal of the optical receiver and generate an output signal; and a controller electrically coupled to the optical receiver, to receive the output signal and convert the output signal into a spacing value between the detection assembly and an external reflection face.

Additionally, the robotic vacuum cleaner according to the second aspect of the present application may further have the following additional technical features.

According an example of the present application, based on the external reflection face being an obstacle, the controller is configured to determine that the obstacle is present when the spacing value between the detection assembly and the external reflection face falls within a preset threshold range, and determine that the obstacle is not present when the spacing value between the detection assembly and the external reflection face does not fall within the preset threshold range.

According an example of the present application, based on the external reflection face being a walking floor, the controller is configured to determine that the walking floor is even when a spacing value between the detection assembly and the external reflection face falls within a preset threshold range, and determine that the walking floor is not even when the spacing value between the detection assembly and the external reflection face does not fall within the preset threshold range.

According an example of the present application, the controller is configured to send a stop instruction or a turn instruction when the obstacle is present or the walking floor is not even, to control the robotic vacuum cleaner to stop moving or turn.

According an example of the present application, the machine body includes a movable body configured for movement of the robotic vacuum cleaner; and a protective casing movably mounted on an outer side of the movable body and configured to, under an action of a top obstacle, reduce a distance between the protective casing and a top of the movable body from a first distance to a second distance. The robotic vacuum cleaner further includes a first sensing device at least partially located between the movable body and the protective casing, and configured to generate a first detection signal indicating that the top obstacle is detected when the distance between the protective casing and the top of the movable body is reduced from the first distance to the second distance; and the controller is coupled to the first sensing device, located in the movable body, and configured to control the movable body to retreat according to the first detection signal.

According an example of the present application, the first sensing device includes a mechanical switch located between the movable body and the protective casing and configured to generate the first detection signal when the distance between the protective casing and the top of the movable body is less than the first distance, and send the first detection signal to the controller.

According an example of the present application, the protective casing is an arc-shaped protective casing at least comprising a first surface and an arc-shaped peripheral surface and located at a forward end of the movable body; the first surface is covered on the top of the movable body; and the arc-shaped peripheral surface is coupled to the first surface, and covered on a side face of the movable body.

According an example of the present application, the arc-shaped peripheral surface includes a first area located at a first end portion of the arc-shaped peripheral surface; a second area located at a second end portion of the arc-shaped peripheral surface, the second end portion being an opposite end of the first end portion; and a third area located between the first area and the second area. The detection assembly is at least partially exposed at an outer side of the third area of the arc-shaped peripheral surface and configured to detect an obstacle ahead.

According an example of the present application, the plurality of optical transmitters are located on a first plane, and configured to transmit a second detection signal for the obstacle ahead; at least one optical receiver is located on a second plane and configured to receive a feedback signal returned by the obstacle ahead where the second detection signal is acted on; the second plane is parallel to the first plane.

According an example of the present application, the detection assembly further includes at least two charging alignment devices exposed through the arc-shaped peripheral surface of the protective casing, the at least two charging alignment devices being located on a third plane parallel, wherein the third plane is parallel to the first plane and the second plane.

According an example of the present application, the at least two optical transmitters are configured to successively transmit the second detection signal according to a rotational sequence; the controller is specifically configured to determine a parameter of the obstacle ahead according to the feedback signal submitted by the at least one optical transmitter and the optical transmitter whose second detection signal corresponds to the feedback signal, and control the robotic vacuum cleaner to move forward according to the parameter of the obstacle ahead.

According an example of the present application, the parameter of the obstacle ahead includes at least one of: an indication parameter indicating whether there is an obstacle within a predetermined distance ahead; a distance of the obstacle ahead relative to the robotic vacuum cleaner; and an angle of the obstacle ahead relative to the robotic vacuum cleaner; and/or, the controller is specifically configured to adjust a forward direction and/or a forward speed of the robotic vacuum cleaner according to the parameter of the obstacle ahead.

A method for detecting a walking floor status of a robotic vacuum cleaner (which is a robotic vacuum cleaner according to the second aspect of the present application) according to the third aspect of the present application includes: transmitting a test light towards the external reflection face; receiving a light reflected by the external reflection face, and converting a light intensity signal of the light into an electrical signal; calculating and processing the electrical signal, and sending an output signal; and converting the output signal into a spacing value between the detection assembly and the external reflection face, and determining a positional information of the external reflection face according to whether the spacing value falls within a preset threshold range.

A method for controlling a robotic vacuum cleaner (which is a robotic vacuum cleaner according to the second aspect of the present application) according to the fourth aspect of the present application includes: when a protective casing of the robotic vacuum cleaner is under action of a top obstacle, and a distance between the protective casing of the robotic vacuum cleaner and a top of the movable body of the robotic vacuum cleaner is reduced from a first distance to a second distance, a first sensing device at least partially located at the protective casing and the top of the movable body generating a first detection signal indicating that the top obstacle is detected; and controlling the robotic vacuum cleaner to retreat according to the first detection signal.

According an example of the present application, the control method further includes: using the detection assembly exposed on the arc-shaped peripheral surface of the protective casing of the robotic vacuum cleaner to transmit a second detection signal for detection of an obstacle ahead; using the detection assembly to receive a feedback signal returned based on the second detection signal; determining a parameter of the obstacle ahead based on the second detection signal and the feedback signal; and controlling the robotic vacuum cleaner to move forward according to the parameter of the obstacle ahead.

According an example of the present application, the step of using the detection assembly exposed on the arc-shaped peripheral surface of the protective casing of the robotic vacuum cleaner to transmit a second detection signal for detection of an obstacle ahead includes: at least two optical transmitters on the arc-shaped peripheral surface of the robotic vacuum cleaner transmitting the second detection signal according to a rotational sequence by utilizing a circuit; and the step of determining a parameter of the obstacle ahead based on the second detection signal and the feedback signal includes: determining the parameter of the obstacle ahead according to the feedback signal submitted by the at least one transmitter and according to the transmitter whose second detection signal corresponds to the feedback signal.

Additional aspects and advantages of the present application will be given in part in the following descriptions, become apparent in part from the following descriptions, or be learned from the practice of the present application.

### BRIEF DESCRIPTION OF THE DRAWINGS

FIG. 1 is a schematic view of a detection assembly for a robotic vacuum cleaner according to an embodiment of the present application.
FIG. 2 is a schematic view of a layout positional relationship of a multiple-channel TOF sensor according to an embodiment of the present application.
FIG. 3 is a schematic view showing a position of a detection assembly mounted on a robotic vacuum cleaner according to some embodiments of the present application.
FIG. 4 is a schematic view of constitution of the detection assembly of the robotic vacuum cleaner illustrated in FIG. 3.
FIG. 5 is a schematic view of constitution of a walking floor status detection system for a robotic vacuum cleaner according to an embodiment of the present application.
FIG. 6 is a schematic view of constitution of a robotic vacuum cleaner according to an embodiment of the present application.
FIG. 7 is a schematic view of a robotic vacuum cleaner according to an embodiment of the present application.
FIG. 8 is a schematic view of some other embodiments of a robotic vacuum cleaner according to the present application.
FIG. 9 is a schematic view showing positional relationship of three transmitters illustrated in FIG. 8.
FIG. 10 is a flow chart of a method for detecting a walking floor status of a robotic vacuum cleaner according to an embodiment of the present application.
FIG. 11 is a flow chart of a method for controlling a robotic vacuum cleaner according to an embodiment of the present application.
FIG. 12 is a flow chart of some other embodiments of a method for controlling a robotic vacuum cleaner according to the present application.

### Reference numerals:

detection assembly 100,
optical transmitter 1 (1a, 1b, 1c), optical receiver 2, charging alignment device 3 (3a, 3b), detection assembly body 4,
sensor 5 (5a, 5b, 5c), optical transmitting element 51, optical receiving element 52,
detection circuit 200, controller 300, machine body 400, movable body 41, protective casing 42,
system 500, robotic vacuum cleaner 600, first sensing device 700.

### DETAILED DESCRIPTION OF THE DISCLOSURE

Embodiments of the present application will be described in detail and examples of the embodiments will be illustrated in the drawings, where same or similar reference numerals are used to indicate same or similar members or members with same or similar functions. The embodiments described herein with reference to the accompanying drawings are explanatory, which are used to illustrate the present application, but shall not be construed to limit the present application.

The following disclosure provides a lot of different embodiments or examples to achieve different structures of the present application. For simplification of the disclosure of the present application, components and arrangements of specific examples are described hereinafter. Certainly, they are merely examples, and are not intended to limit the present application. Additionally, the present application may repeat reference numerals and/or letters in different example. The repeat is for purpose of simplification and clarity, and itself does not indicate relationship of the discussed various embodiments and/or arrangements. Additionally, the present application provides various examples of specific processed and materials, but a person skilled in the art would realize applicability of other processes and/or usage of other materials.

### Embodiment 1

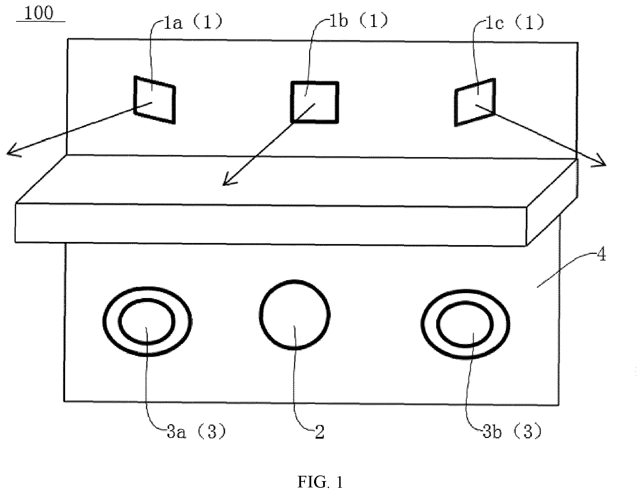

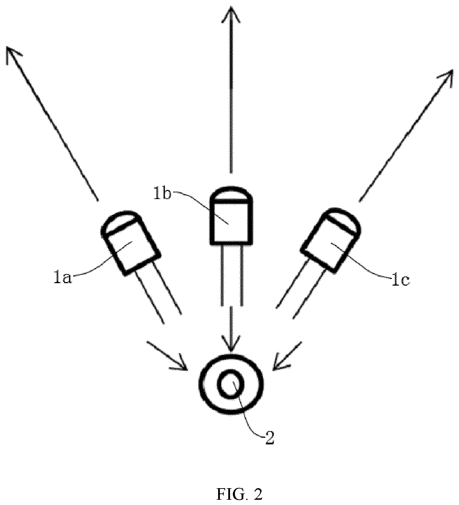

A detection assembly 100 for a robotic vacuum cleaner 600 according to some embodiments of the present application is described below with reference to FIGS. 1 and 2.

In the present application, in order to reduce investment in molds and simplify assembly steps, a composite structure of an optical transmitter 1, an optical receiver 2 and a charging alignment device 3 (e.g., a recharging fine alignment infrared light) is firstly designed. Preferably, a photon time of flight (TOF) based sensor is employed, which performs distance measurement by measuring time difference between photon transmission and reception, and will not be affected by light dissipation intensity like infrared. In order to ensure that TOF can accurately sense information about an obstacle in front of the robotic vacuum cleaner 600, it is preferably mounted at an upper middle of a front end of the robotic vacuum cleaner 600. However, in order to receive a recharging infrared signal transmitted by a charging dock, the recharging fine alignment infrared light is preferably mounted at a middle of the front end of the robotic vacuum cleaner.

As illustrated in FIG. 1, the detection assembly 100 for the robotic vacuum cleaner 600 according to embodiments of a first aspect of the present application includes: a plurality of optical transmitters 1 (e.g., an optical transmitter 1a, an optical transmitter 1b and an optical transmitter 1c illustrated in FIG. 1), one optical receiver 2, a plurality of charging alignment devices 3 (e.g., a charging alignment device 3a and a charging alignment device 3b illustrated in FIG. 1), and a detection assembly body 4. The optical transmitters 1, the optical receiver 2, and the recharging fine alignment signal lights 3 are all mounted on the detection assembly body 4. The plurality of optical transmitters 1, the one optical receiver 2, the recharging fine alignment signal lights 3 and the detection assembly body 4 are integrated into one piece. Preferably, the detection assembly 100 is mounted at the upper middle of the front end of the robotic vacuum cleaner 600. In the present application, by arranging the detection assembly 100 at the front end of the robotic vacuum cleaner 600, a function of avoiding collisions and obstacles can be realized. In a traditional sensor structure, there is a one-to-one correspondence relationship between transmitters and receivers. For example, three transmitters correspond to three receivers, respectively. The more the number of devices, the more bulky and complicated the structure is. However, in the present embodiment, the number of the optical receivers is greatly reduced. The present embodiment just uses one optical receiver 2 to achieve the function that formerly can only be realized by a plurality of optical receivers, so that the number of devices is reduced, the costs are saved, and further the structure is simplified. Additionally, by integrating the plurality of optical transmitters 1, the one optical receiver 2, the recharging fine alignment signal lights 3 and the detection assembly body 4 into one piece, this structure is smaller than the traditional sensor structure, and can further provide positional space for the robotic vacuum cleaner to carry other functional sensors while saving structural space of the front end of the robotic vacuum cleaner.

Preferably, the optical transmitters 1 and the optical receiver 2 each employs the time of flight (TOF) sensor which performs distance measurement by measuring time difference between photon transmission and reception, and will not be affected by light dissipation intensity like infrared. However, the present application is not limited to this solution. For example, the optical transmitters 1 and the optical receiver 2 may also be realized by employing hardware such as optical tracing sensors (OTS).

Although the present embodiment gives a schematic view showing three optical transmitters 1, the present application is not limited to this solution and two, four or more optical transmitters are possible. Furthermore, although the present embodiment gives a schematic view showing two recharging fine alignment signal lights 3, the present application is not limited to this solution and three, four or more recharging fine alignment signal lights are possible. In embodiments of the present application, the distance measurement coverage of the front end can be enlarged by increasing the number of the optical transmitters 1, which can be greatly promoted compared with the measurement range of the traditional sensor.

In embodiments of the present application, the optical transmitters 1 and the optical receiver 2 are preferably not in the same horizontal plane, and the optical receiver 2 is located at a middle area of the optical transmitter 1a and the optical transmitter 1c on the left and right sides, i.e., not beyond vertical positions of the left and right optical transmitters. By arranging the optical receiver 2 at the middle area of the optical transmitter 1a, the optical transmitter 1b and the optical transmitter 1c, signals of the left, middle and right optical transmitters 1 can be easily received, and thus can be symmetrically processed on software. However, the present application is not merely limited to the above-mentioned position.

In embodiments of the present application, the recharging fine alignment signal lights 3 may be arranged below/above an area of the optical transmitters. Preferably, the recharging fine alignment signal lights 3 and the optical transmitters 1 are not in the same horizontal plane. The function of the recharging fine alignment signal lights 3 is to determine direction of the charging dock according to strength relationship between the received left and right infrared signals, to control the robotic vacuum cleaner to return to the charging dock.

FIG. 2 is a schematic diagram showing layout positional relationship of a multi-channel TOF sensor according to an embodiment of the present application. As illustrated in FIG. 2, a three-channel TOF sensor is taken as an example, the optical transmitter 1a, the optical transmitter 1b and the optical transmitter 1c are TOF transmitting lights, and the optical receiver 2 is a TOF receiving light. The three transmitting lights transmit optical signals with different coded waveforms, and the receiving light determines which channel's transmitting light detects obstacle information by reading reception sequence signal and further determine a relative position between the obstacle and the robotic vacuum cleaner.

In embodiments of the present application, a relative distance between the optical transmitter 1a, the optical transmitter 1b and the optical transmitter 1c satisfies a certain relationship. For example, a distance between adjacent optical transmitters 1 of the detection assembly 100 is less than 50mm, but it is not merely limited to the afore-mentioned distance.

In embodiments of the present application, relative angle between the optical transmitter 1a, the optical transmitter 1b and the optical transmitter 1c satisfies a certain relationship. For example, a normal angle between adjacent optical transmitters 1 is greater than 0° and less than 90°, but it is not limited to the afore-mentioned angle.

In embodiments of the present application, based on the TOF sensor, the OTS sensor, etc., identification and avoidance of obstacles can realized, and the former infrared sensor can be replaced, to eliminate influence of the ambient light change on a traditional infrared distance measurement, and bring a better user experience to consumers.

### Embodiment 2

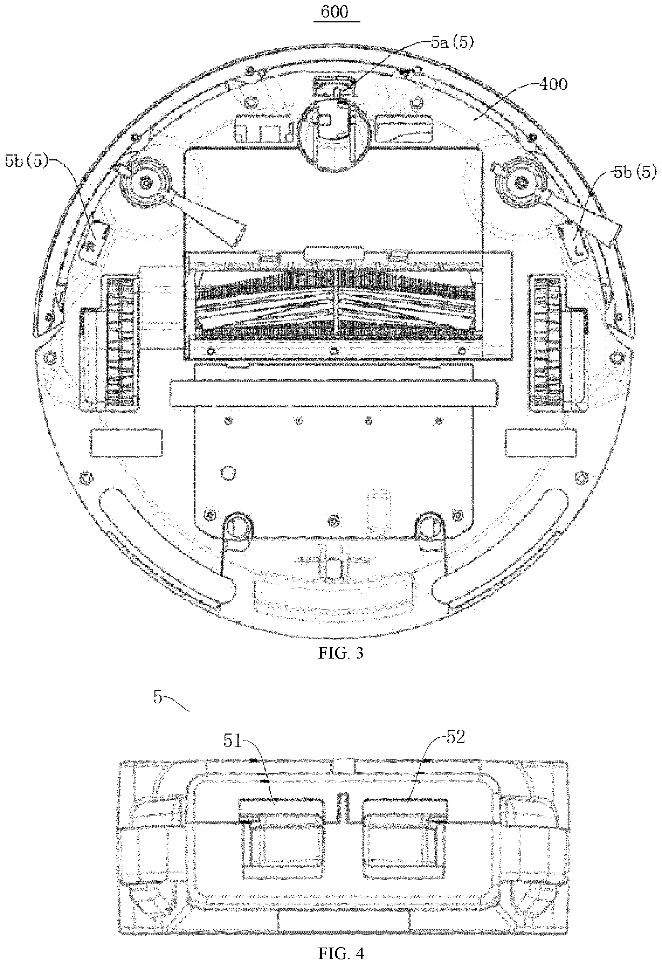

A detection assembly for a robotic vacuum cleaner according to some other embodiments of the present application is described below with reference to FIGS. 3 and 4, for realizing functions of downward looking and edge cleaning. This detection assembly can be used separately or in conjunction with the detection assembly in Embodiment 1.

TOF itself has a distance measurement function, and thus derives a series of functions such as measuring a height from a floor and a width from a wall of the robotic vacuum cleaner, so that traditional devices with infrared downward-looking, edge cleaning or other similar functions can be replaced. Since a photon time of flight (TOF) based sensor is employed, which performs distance measurement by measuring time difference between photon transmission and reception, and will not be affected by light dissipation intensity like infrared, its accuracy is improved significantly.

As illustrated in FIG. 3, the detection assembly for the robotic vacuum cleaner according to embodiments of the present application includes: a plurality of sensors 5 (e.g., a sensor 5a, a sensor 5b and a sensor 5c illustrated in FIG. 3). The plurality of sensors 5 are mounted to a body of the robotic vacuum cleaner. Preferably, the sensors 5 are mounted at left, middle and right positions of the front end of the robotic vacuum cleaner. As illustrated in FIG. 4, each sensor 5 may include one optical transmitting element 51 and one optical receiving element 52. For example, each sensor 5 may include one transmitting light 51 and one receiving light 52.

Preferably, each of the sensors 5 employs a time of flight (TOF) sensor, which performs distance measurement by measuring time difference between photon transmission and reception, and will not be affected by light dissipation intensity like infrared. However, the present application is not limited to this solution. For example, the sensor 5 may also be realized by employing hardware such as an optical tracing sensor (OTS), an infrared ranging sensor, a lidar, a ultrasonic sensor, etc.

Although the present embodiment gives a schematic view showing three sensors, the present application is not limited to this solution, and two, four or more sensors are possible. In embodiments of the present application, the distance measurement coverage of the front end can be enlarged by increasing the number of the sensors 5, which can be greatly promoted compared with the measurement range of the traditional sensor.

Similarly, this structure may also be used as an edge cleaning sensor based on distance measurement principle of TOF itself, to replace the function of a traditional infrared edge cleaning sensor, and have significantly improved accuracy.

In embodiments of the present application, based on the TOF sensor, the OTS sensor, etc., the former infrared sensor can be replaced, to eliminate influence of the ambient light change on a traditional infrared distance measurement, and bring a better user experience to consumers.

### Embodiment 3

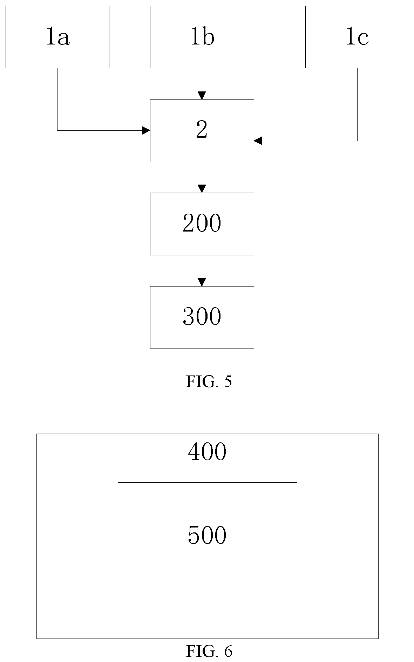

As illustrated in FIG. 5, a walking floor status detection system 500 for a robotic vacuum cleaner according to embodiments of the present application includes: a detection assembly 100 of the above-described Embodiment 1; a detection circuit 200, the detection circuit 200 being electrically coupled to the optical receiver 2, to calculate and process an electrical signal of the optical receiver 2, and generate an output signal; and a controller 300, the controller 300 being electrically coupled to the detection circuit 200 to receive the output signal, and after the output signal is received, calculate and convert the output signal into a spacing value between the detection assembly 100 and an external reflection face.

When the external reflection face is an obstacle, the controller 300 is configured to determine that an obstacle is present when the spacing value between the detection assembly 100 and the external reflection face falls within a preset threshold range, and determine that an obstacle is not present when the spacing value between the detection assembly 100 and the external reflection face does not fall within the preset threshold range.

When the external reflection face is a walking floor, the controller 300 is configured to determine that the walking floor is even when the spacing value between the detection assembly 100 and the external reflection face falls within the preset threshold range, and to determine that the walking floor is uneven when the spacing value between the detection assembly 100 and the external reflection face does not fall within the preset threshold range.

Correspondingly, the optical transmitter 1a, the optical transmitter 1b and the optical transmitter 1c may be arranged to transmit light towards an underneath of the robotic vacuum cleaner 600, to detect whether road surface on which the robot walks is even. The optical transmitter 1a, the optical transmitter 1b and the optical transmitter 1c may also be arranged to transmit light towards left, right, front or rear side to realize detection of surrounding obstacles.

As a preferable implementation, the controller 300 is configured to send a stop or turn instruction when an obstacle is not present or the walking floor is uneven, to control the robotic vacuum cleaner to stop moving or to turn.

### Embodiment 4

As illustrated in FIG. 6, the robotic vacuum cleaner 600 according to embodiments of the present application includes: a machine body 400; and a walking floor status detection system 500 for a robotic vacuum cleaner as described in Embodiment 3. The detection assembly 100 is located at a front part of the machine body 400, to detect an outside obstacle by means of the detection assembly 100 disposed at the front part, or to measure a height of the robotic vacuum cleaner 600 from the floor by means of the detection assembly 100.

Specifically, the machine body of the robotic vacuum cleaner 600 is internally provided with a circuit board. The circuit board is used to install and integrate some electric elements of the robotic vacuum cleaner, and realize electrical coupling of various electric elements.

The robotic vacuum cleaner 600 may include the machine body, and a dustbox, a blower, the circuit board and the like disposed in the machine body. The dustbox is used to accommodate and store dust, hair, etc. cleaned by the robotic vacuum cleaner, to realize the cleaning function of the robotic vacuum cleaner. The machine body is externally provided with a drive wheel, a universal wheel and other assemblies. The drive wheel is used to realize movement of the robotic vacuum cleaner, and the universal wheel is used to realize turning of the robotic vacuum cleaner. After receiving an output signal fed back by the detection assembly 100, the controller 300 controls the universal wheel and the drive wheel to perform corresponding operations.

For instance, when the detection assembly 100 provided at a left side of the robotic vacuum cleaner 600 send an output signal indicating collision with an obstacle, the controller 300 may control the drive wheel to turn to the right to avoid the obstacle.

A robotic vacuum cleaner 600 according to a specific embodiment of the present application is further elaborated below in conjunction with the attached drawings.

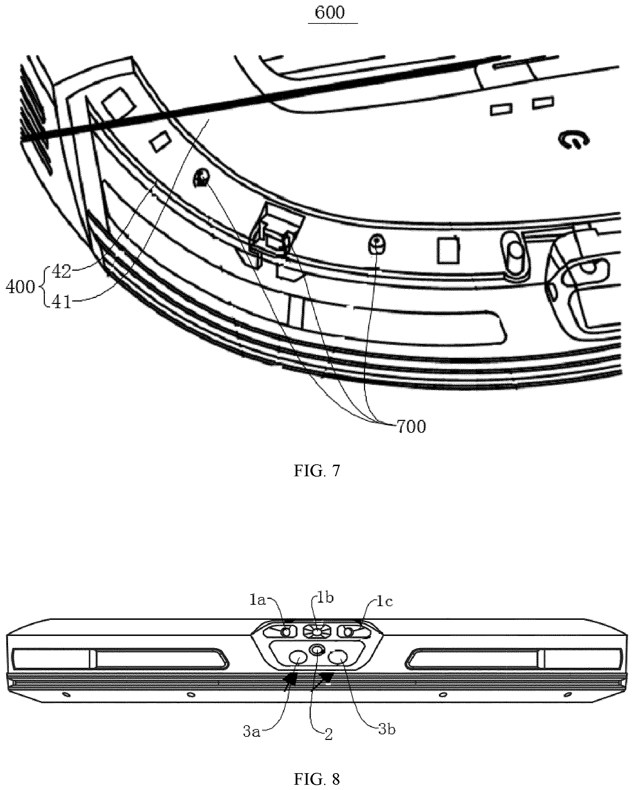

As illustrated in FIG. 7, the present embodiment provides a robotic vacuum cleaner 600 including a machine body 400, and the machine body 400 includes:
a movable body 41 used for movement of the robotic vacuum cleaner 600; and
a protective casing 42 movably mounted on an outer side of the movable body 41, and used to reduce a distance from a top of the movable body 41 from a first distance to a second distance under action of a top obstacle.

The robotic vacuum cleaner 600 further includes: a first sensing device 700 at least partially located between the movable body 41 and the protective casing 42 and used to generate a first detection signal indicating that the top obstacle is detected when the distance from the protective casing 42 to the top of the movable body 41 is reduced from the first distance to the second distance; and
a controller 300 is coupled to the first sensing device 700, located in the movable body 41, and used to control the movable body 41 to retreat according to the first detection signal.

The robotic vacuum cleaner 600 may be a floor robotic vacuum cleaner 600 that can move on a floor, a desktop, or other positions. The robotic vacuum cleaner 600 includes but is not limited various floor cleaning robots, floor disinfection robots, or the like.

The movable body 41 includes:
a movable chassis;
a movable casing mounted on the movable chassis, and constituting an outer surface of the movable body 41, the movable casing and the movable chassis defines an internal space of the movable body 41;
a cleaning unit mounted to a lower part of the movable chassis and configured to perform cleaning by rubbing against the floor or support surface; and
a disinfection unit including a disinfectant nozzle oriented away from the movable chassis, and configured to spray disinfectant onto the floor or a supporting surface except the floor.

In short, in the present embodiment, the robotic vacuum cleaner 600 may be any movable structure.

In some embodiments, the robotic vacuum cleaner 600 uses itself as a reference, it can move in two opposite directions, one is a forward direction of the robotic vacuum cleaner 600, and one is a backward direction of the robotic vacuum cleaner 600. An angle between the moving direction and the backward direction is 180 degrees. If the robotic vacuum cleaner 600 needs to move in other direction, orientation of its movable chassis needs to be adjusted to align its front end or rear end opposite the front end with this direction. In the present embodiment, the protective body is located at the front end of the robotic vacuum cleaner 600.

In some embodiments, the movable body 41 may have a cuboid shape, a cylinder shape or an arbitrary shape. In the present embodiment, the movable body 41 preferably has a cylinder shape. The movable body 41 is cylindrical, and its peripheral surface is arc, which can reduce fierce collision with the obstacle during movement of the movable body 41, and facilitate movement of the robotic vacuum cleaner 600.

The protective casing 42 is mounted at an outer side of the movable body 41, and in the present embodiment, is movably mounted at the outer side of the movable body 41.

In the present embodiment, the protective casing 42 is fitted over the front end of the movable body 41 in the forward direction.

In the present embodiment, the protective casing 42 may be a striker plate that has strong anti-collision capacity, and is not easy to be damaged after collision with the obstacle, to protect the movable body 41.

The protective casing 42 is movably mounted on the movable body 41, and has a certain moving space in a direction perpendicular the support surface of the movable body 41. In this case, the state of the protective casing 42 is distinguished by a spacing between the protective casing 42 and the top of the movable body 41, and thus the protective casing 42 has a first state and a second state. In the first state, a gap exists between the protective casing 42 and the movable body 41, and for example, the gap may be between 1-3 centimeters. That is, there is spacing of 1cm or more between an inner surface of a top plate of the protective casing 42 and an outer surface of the top of the movable body 41, when the protective casing 42 is in the first state.

When the protective casing 42 is in the second state, the protective casing 42 moves towards the top of the movable body 41, and in the ultimate second state, the top plate of the protective casing 42 abut the top of the movable body 41.

In some embodiments, the top of the movable body 41 is provided with an elastic device. The elastic device has a first deformation quantity when the protective casing 42 is in the first state, and can support the protective casing 42; when the protective casing 42 is in the second state, the elastic device is compressed and has a second deformation quantity, and in this way, the protective casing 42 may approach the top of the movable body 41.

Therefore, when there is an obstacle at the top of the movable body 41, the top of the protective casing 42 will interact with the obstacle prior to the movable body 41. Furthermore, the top of the protective casing 42 also exposes the first sensing device 700, and the first sensing device 700 may be used to detect the top obstacle, and generate the first detection signal indicating that the top obstacle is present.

The controller 300 may include various types of devices that have information processing functions, such as microprocessors, embedded controllers, digital signal processors, or programmable arrays. The controller 300 is located in the internal space defined by the movable casing and the movable chassis of the movable body 41, and formerly establishes an electrical coupling with the first sensing device 700. In this way, after the first sensing device 700 transmits the first detection signal to controller, the controller knows that there is a top obstacle ahead, the robotic vacuum cleaner 600 is not suitable to move on, and at this time, the controller will control the movable body 41 to retreat, to move in a direction that has been passed before and where there is no top obstacle.

The protective casing 42 can move up and down in a perpendicular direction of the support surface of the robotic vacuum cleaner 600, thus, when the first sensing device 700 detects a top obstacle, the robotic vacuum cleaner 600 can still move, to prevent the robotic vacuum cleaner 600 from being stuck directly by the top obstacle. Therefore, the robotic vacuum cleaner 600 provided by the present embodiment not only has detection function of a top obstacle, but can also return successfully after encountering a top obstacle to avoid stuck phenomenon, improving intelligence and user satisfaction of the robotic vacuum cleaner 600.

In the present embodiment, the first sensing device 700 is at least partially located between the top of the movable body 41 and an inner side of the top plate of the protective casing 42. That is, the first sensor is at least partially located between fitting faces of the movable body 41 and the top of the protective casing 42.

In some other embodiments, as illustrated in FIG. 7, the first sensing device 700 may further have a part penetrating the top plate of the protective casing 42 and located at the top of the protective casing 42, and the first sensing device 700 may interact with the top obstacle, to move the protective casing 42 downward and thus generate the first detection signal.

Further, the first sensing device 700 includes:
a mechanical switch located between the movable body 41 and the protective casing 42 and configured to generate the first detection signal when interacting with the top obstacle and send the first detection signal to the controller.

In the present embodiment, the first sensing device 700 includes one or more mechanical switches located between the protective casing 42 and the top of the movable body 41. Each mechanical switch includes a first end and a second end. If the first end is provided at the inner side of the top plate of the protective casing 42, then the second end is provided at the top of the movable body 41; if the first end is provided at the top of the movable body 41, then the second end is provided at the inner side of the top of the protective casing 42. The first end and the second end may be made of conductor material having electrically conductive function. For example, the first end and the second end may both be metal contacts, if the two metal contacts are in contact with each other, then a conductive path may be formed to generate the first detection signal indicating that the top obstacle is present.

Under normal circumstances, the second end is separated from the first end, when the protective casing 42 interacts with the top obstacle, the protective casing 42 drives one of the first end and the second end to move to the other, to generate the first detection signal representing that a top obstacle is detected.

For example, the number of the mechanical switches is N, the N mechanical switches are equiangular distributed on the top plate of the protective casing 42. The value of N may be 2, 3, 4, etc.

In the present embodiment, the first sensing device 700 includes one or more mechanical switches.

In some other embodiments, the first sensing device 700 may also be:
a pressure sensor. A pressure-receiving face is located at the top of the movable body, and the top of the protective casing 42 is internally provided with a pressure-applying component that can apply pressure to the pressure-receiving face. If the top obstacle acts, the pressure-receiving face will be subject to a force of the pressure-applying component moving downwards with the protective casing 42, and thus the pressure sensor detects an increased pressure and generates a pressure signal indicating that the top obstacle is detected.

In short, the structure of the first sensing device 700 may be various, and specific implementation is not limited to any of the above.

In some embodiments, the protective casing 42 is an arc-shaped protective casing 42 at least comprising a first surface and an arc-shaped peripheral surface and located a forward end of the movable body 41;
the first surface is covered on the top of the movable body 41; and
the arc-shaped peripheral surface is coupled to the first surface and covered on a side face of the movable body 41.
The arc-shaped peripheral surface matches an arc of the side face of the movable body 41.

An angle of the arc-shaped peripheral surface in a circle may be between 120 degrees and 180 degrees, such as 135 degrees, etc.

The first surface is an exposed surface of the top of the protective casing 42.

In the present embodiment, an angle of 85 to 95 degrees, such as, 90 degrees, etc., may be formed between the first surface and the arc-shaped peripheral surface.

In some embodiments, the arc-shaped peripheral surface includes:
a first area located at a first end portion of the arc-shaped peripheral surface;
a second area located at a second end portion of the arc-shaped peripheral surface, the second end portion is an opposite end of the first end portion; and
a third area located between the first area and the second area;
the detection assembly 100 of the robotic vacuum cleaner 600 is at least partially exposed at an outer side of the third area of the arc-shaped peripheral surface and configured to detect an obstacle ahead;
the third area is smaller than the first area and the second area.

In the present embodiment, the arc-shaped peripheral surface is divided into three areas. The third area is located at a middle of the circular arc-shaped peripheral surface, a central point of the circular arc-shaped peripheral surface is located in the third area, and the first area and the second area are on two sides of the third area respectively.

The first area and the second area may be symmetrically distributed on two sides of the third area.

In the present embodiment, the detection assembly 100 is concentrated in the third area, rather than dispersed in various areas of the circular arc-shaped peripheral surface. In this way, the first area and the second area may be used to mount other devices.

In some embodiments, the third area may an area recessed towards a center of the movable body 41 relative to the first area and/or the second area. In this way, a top of the detection assembly exposed through the third area will not be higher than the first area and/or second area, so that when collision with an obstacle ahead, damage to the detection assembly 100 due to direct action on the detection assembly 100 can be reduced.

In some other embodiments, the part of the detection assembly 100 exposed from an outer surface of the third area is provided with an additional protective cover to protect the detection assembly 100.

Further, a center line of the arc-shaped peripheral surface is a dividing line of the third area; the first area and the second area are symmetrically distributed at two sides of the third area; and the third area is smaller than the first area and the second area.

As illustrated in FIG. 8, the detection assembly 100 includes:
at least two optical transmitters 1 (e.g., the optical transmitter 1a, the optical transmitter 1b and the optical transmitter 1c illustrated in FIG. 8) located on a first plane and used to send a second detection signal for an obstacle ahead; and
at least one optical receiver 2 located on a second plane and configured to receive a feedback signal returned by the obstacle ahead where the second detection signal is acted on. The second plane is parallel to the first plane.

For example, the number of the optical receivers 2 is not more than the number of the optical transmitters 1.

The second detection signal herein may be various wireless signals, such as an infrared signal, an ultrasonic signal, a laser signal, or an ultraviolet signal, etc.

In the present embodiment, the second detection signal may preferably be the infrared signal which has a low hardware cost and excellent detection effect.

The first plane and second plane may be both parallel to a plane of the support surface of the robotic vacuum cleaner 600. If the robotic vacuum cleaner 600 is placed in a horizontal plane, then the first plane and second plane are both parallel to the horizontal plane, but the first plane and the second plane are horizontal planes of different heights in a vertical plane.

Further, the at least two optical transmitters 1 are symmetrically distributed with respect to a center line of the protective casing 42 perpendicular to the support plane of the movable body.

In the present embodiment, the number of the optical transmitters 1 may be 2 to 6, preferably 3 or 4.

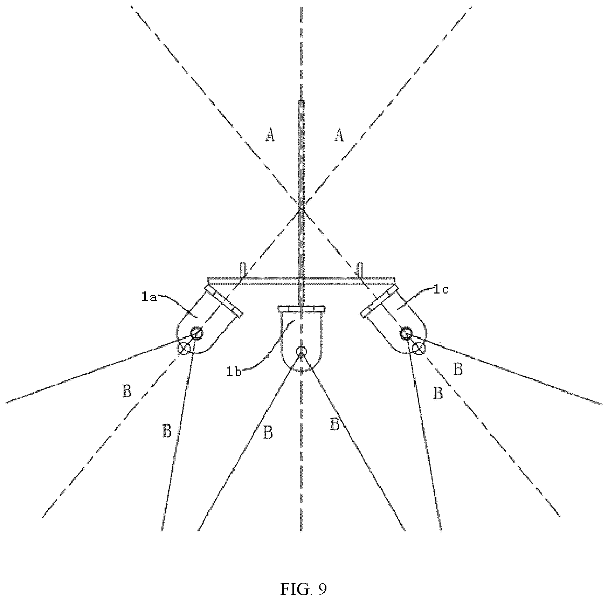

For example, three optical transmitters 1 are provided, relative layout relationship of the three optical transmitters 1 can refer to FIG. 9, specifically as follows.

The optical transmitter 1a, the optical transmitter 1b and the optical transmitter 1c may be distributed equiangular in the third area.

Transmission angles of the optical transmitter 1a, the optical transmitter 1b and the optical transmitter 1c are oriented to different directions. For example, a transmission angle of each of the three optical transmitters 1 is 2B; and center lines of the three optical transmitter 1 angles are connected to form two A angles. The center line of the optical transmitter 1b exactly bisects an angle formed by center lines of the optical transmitter 1a and the optical transmitter 1c.

In some embodiments, as illustrated in FIG. 8, the robotic vacuum cleaner 600 also includes:
at least two charging alignment devices 3 (e.g., a charging alignment device 3a and a charging alignment device 3b illustrated in FIG. 8) exposed through the arc-shaped peripheral surface of the protective casing 42 and located on a third plane. The third plane is parallel to the first plane and the second plane.

The charging alignment devices 3 are used as a device that performs direction alignment when the robotic vacuum cleaner 600 moves onto an automatic charging dock. The charging alignment device 3 may include: a wireless signal receiver, which can receive a wireless signal transmitted by the transmitter of the alignment device to adjust movement direction of the robotic vacuum cleaner 600, and realizing the alignment.

In the present embodiment, the at least two charging alignment devices 3 are provided in the third plane. The third plane is parallel to the above described first and second planes, and at same time is different from the first and second planes.

Further, the at least two charging alignment devices 3 are symmetrically distributed in the third area with respect to the at least one optical receiver 2.

For example, the detection assembly 100 includes one optical receiver 2, and two the charging alignment devices 3, and the two charging alignment devices 3 may be symmetrically distributed at two sides of the optical receiver 2. Further, the optical receiver 2 may be provided in a center line of the arc-shaped peripheral surface. In this way, the two charging alignment devices 3 are symmetrically distributed with respect to the optical receiver 2 on the arc-shaped peripheral surface.

In some other embodiments, the at least two optical transmitters 1 are used to transmit the second detection signal according to a rotational sequence;
the controller 300 is specifically used to determine a parameter of an obstacle ahead according to the feedback signal submitted by the at least one optical transmitter 1 and the optical transmitter 1 whose second detection signal corresponds to the feedback signal, and control the robotic vacuum cleaner 600 to move forward according to the parameter of the obstacle ahead.

For example, two adjacent optical transmitters 1 performs a rotational cycle of transmission of the second detection signal by the optical transmitter 1 in a predetermined millisecond or referred to as a rotational time unit.

The number of the at least two optical transmitters 1 is M. The mth optical transmitter 1 is used to transmit the second detection signal in the mth specified direction in m*n+m rotational cycle. m is an integer not less than 2 and not greater than M; and n is 0 or a positive integer.

Suppose the number of the optical transmitters 1 is 3, the optical transmitters 1 may take turns to send the second detection signal as follows:
the first optical transmitter 1a is used to transmit the second detection signal in the first specified direction in 3n+1 rotational cycle, n is a natural number, specifically, 0 or a positive integer;
the second optical transmitter 1b is used to transmit the second detection signal in the second specified direction in 3n+2 rotational cycle; and
the third optical transmitterlc is used to transmit the second detection signal in the third specified direction in 3n+3 rotational cycle.

Any two of the first specified direction, the second specified direction, and the third specified direction are different.

In the present embodiment, only one the optical receiver 2 may be provided. The one optical receiver 2 is equivalent to being shared by the at least two optical transmitters 1, to reduce the number of the optical receiver 2 and save hardware cost.

In some embodiments, the parameter of the obstacle ahead includes at least one of the followings:
an indication parameter indicating whether there is an obstacle within a predetermined distance ahead;
a distance of the obstacle ahead relative to the robotic vacuum cleaner 600; and
an angle of the obstacle ahead relative to the robotic vacuum cleaner 600;
   and/or,
the controller 300 is specifically used to adjust a forward direction and/or a forward speed of the robotic vacuum cleaner 600 according to the parameter of the obstacle ahead.

In the present embodiment, transmitting power of the optical transmitter 1 may be fixed, and thus a distance that transmitted wireless signal encounters the obstacle ahead to return and reach the optical receiver 2 is relatively fixed. Therefore, in the present embodiment, the controller 300 may determine whether there is an obstacle within a predetermined distance ahead according to whether the optical receiver 2 receives the feedback signal, to obtain the indication parameter.

After the second detection signal is transmitted, if there is a returned feedback signal based on the second detection signal, a distance of the obstacle ahead from robotic vacuum cleaner 600 can be estimated according to transmitting time of second detection signal and receiving time of the feedback signal, as well as propagation speeds of the second detection signal and the feedback signal in the air.

In the present embodiment, any of the at least two optical transmitters 1 has a different orientation, and can be used to detect obstacles in different angles relative to the robotic vacuum cleaner 600.

In the present embodiment, the controller can determine the angle of the obstacle ahead relative to the robotic vacuum cleaner 600 based on the transmission angle of the second detection signal, a receiving angle of the feedback signal, etc.

### Embodiment 5

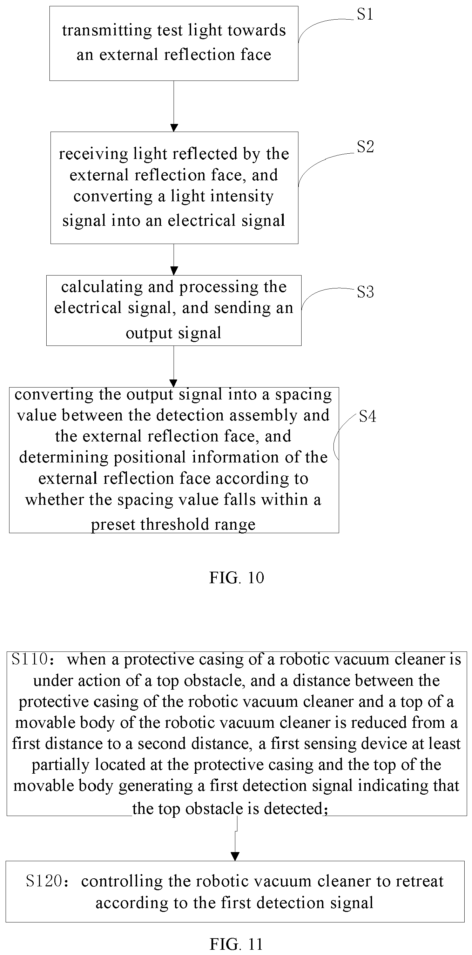

As illustrated in FIG. 10, a walking floor status detection method for a robotic vacuum cleaner according to embodiments of the present application includes:
S1: test light is transmitted towards an external reflection face.
S2: light reflected by the external reflection face is received, and a light intensity signal is converted into an electrical signal.
S3: the electrical signal is calculated and processed, and an output signal is sent; and
S4: the output signal is calculated and converted into a spacing value between a detection assembly and an external reflection face, and positional information of the external reflection face is determined according to whether the spacing value is fall within a preset threshold range.

Thus, the present embodiment calculates and processes an electrical signal fed back by a TOF optical receiver, performs distance measurement by measuring time difference between photon transmission and reception, and will not be affected by light dissipation intensity like infrared.

In the walking floor status detection method for the robotic vacuum cleaner according to embodiments of the present application, when the spacing value between the detection assembly and the external reflection face falls within the preset threshold range, it is determined that the walking floor is normal or an obstacle is detected; when the spacing value between the detection assembly and the external reflection face does not fall within the preset threshold range, it is determined that the walking floor is uneven or no obstacle is detected.

### Embodiment 6

As illustrated in FIG. 11, a control method for a robotic vacuum cleaner 600 according to embodiments of the present application includes:
at block S110: when a protective casing 42 of the robotic vacuum cleaner 600 is under action of a top obstacle, and a distance between the protective casing 42 of the robotic vacuum cleaner 600 and a top of the movable body 41 of the robotic vacuum cleaner 600 is reduced from a first distance to a second distance, a first sensing device 700 at least partially located at the protective casing 42 and the top of the movable body 41 generates a first detection signal indicating that the top obstacle is detected; and
at block S120: the robotic vacuum cleaner 600 is controlled to retreat according to the first detection signal.

The control method for the robotic vacuum cleaner 600 provided in the present embodiment may be applied in the above-described robotic vacuum cleaner 600.

In the present embodiment, the first sensing device 700 exposed on the top of the protective casing 42 of the robotic vacuum cleaner 600 is used to detect the top obstacle, to obtain the first detection signal.

At block S120, the robotic vacuum cleaner 600 will be controlled to retreat according to the first detection signal, to reduce a phenomenon that the robotic vacuum cleaner 600 is stuck in a certain place due to continued advancement of the robotic vacuum cleaner 600.

In some embodiments, the method further includes:
In a process of retreat of the robotic vacuum cleaner 600, if only the first detection signal for the top obstacle interrupts, the robotic vacuum cleaner 600 is controlled to adjust a forward direction, the adjusted forward direction is different from a forward direction before the retreat; and the robotic vacuum cleaner 600 is controlled to move according to the adjusted forward direction.

For example, the forward direction of the robotic vacuum cleaner 600 is adjusted according to a first preset angle, and the preset angle may be 30 degrees, 45 degrees, or 90 degrees, etc.

If the top obstacle is detected again within a predetermined time in the process of adjusting the forward direction and moving forward, it can retreat again and adjust the forward direction according to a second preset angle. Herein, the second preset angle and the first preset angle may be the same or different.

In the present embodiment, the protective casing 42 can move up and down in a perpendicular direction of the support surface of the robotic vacuum cleaner 600, thus, after initial encounter with the top obstacle, the protective casing 42 itself moves downwards and the robotic vacuum cleaner 600 can retreat smoothly, to reduce a phenomenon of being stuck by the top obstacle.

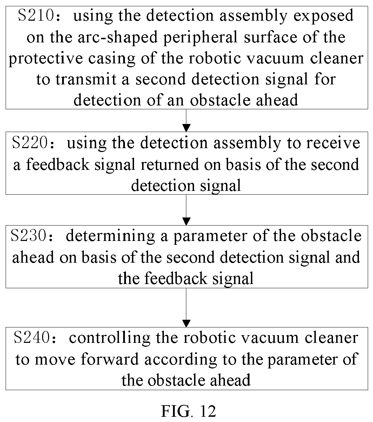

In some embodiments, as illustrated in FIG. 12, the control method further includes:
at block S210: the detection assembly exposed on an arc-shaped peripheral surface of the protective casing 42 of the robotic vacuum cleaner 600 is used to transmit a second detection signal for detection of an obstacle ahead;
at block S220: the detection assembly is used to receive a feedback signal returned based on the second detection signal;
at block S230: a parameter of the obstacle ahead is determined based on the second detection signal and the feedback signal; and
at block S240: the robotic vacuum cleaner 600 is controlled to move forward according to the parameter of the obstacle ahead.

In the present embodiment, the arc-shaped peripheral surface of the protective casing 42 is also provided with a detection assembly, and this detection assembly can be used to detect an obstacle ahead.

In the present embodiment, specific structure of the detection assembly may refer to the above-described embodiments and will not be repeated herein. In general, the optical transmitter 1 of the detection assembly will transmit the second detection signal, the optical receiver 2 will receive the feedback signal returned based on the second detection signal, and the controller of the robotic vacuum cleaner 600 is informed based on the feedback signal, and thus the controller can determine the parameter of the obstacle ahead based on the second detection signal and the feedback signal.

The parameter of the obstacle ahead herein may include at least one of a distance, an angle and/or an indication parameter provided by the above-described embodiments.

In the present embodiment, at block S220, the step may include:
at least two optical transmitters 1 on the arc-shaped peripheral surface of the robotic vacuum cleaner 600 transmit the second detection signal according to a rotational sequence by utilizing a circuit;
at block S230, the step may include:
   the parameter of the obstacle ahead is determined according to the feedback signal submitted by the at least one optical transmitter 1 and the optical transmitter 1 whose second detection signal corresponds to the feedback signal.

If the number of the optical transmitters 1 is M, the step of at least two optical transmitters 1 on the arc-shaped peripheral surface of the robotic vacuum cleaner 600 transmitting the second detection signal according to a rotational sequence by utilizing a circuit may include:
the mth optical transmitter 1 is used to transmit the second detection signal in the mth specified direction within m*n+m rotational cycle. m is an integer not less than 2 and not greater than M; and n is 0 or a positive integer.

Several specific examples are provided below in combination with any of the above-described embodiments:
In the present example, at least one optical receiver 2 and the optical transmitters 1 not less than the optical receiver 2 are placed in different planes, and the optical transmitters and the optical receiver 2 are symmetrically distributed with reference to a symmetrical line of the striker plate. Meanwhile, the charging alignment device 3 is located in a different plane from that of the optical transmitters and the optical receiver 2.

Moreover, in order to better detect an obstacle above the machine, and prevent the machine from being stuck in a bottom of the furniture, a vertical displacement gap is added to the striker plate and a detection device is added on a fitting face between the striker plate and the whole machine. When an obstacle above the machine presses the striker plate, the detection device is triggered, and the machine starts to retreat.

The obstacle detection capacity is promoted while the space of the machine is saved, and the recharging fine alignment is realized. Transmission and reception for the obstacle detection are located in different planes, the optical transmitters 1 and the optical receiver 2 are symmetrically distributed at two sides of the symmetrical line of the striker plate, and the obstacle detection in the vertical direction is realized.

Those skilled in the art shall understand that: all or parts of the steps of the above-described method embodiments may be achieved by commanding the related hardware with programs. The programs may be stored in a computer readable storage medium, and the programs include the steps of the above-described method embodiments when run on a computer; moreover, the storage medium layer includes: various mediums that can store program codes, such as a mobile storage device, a read-only memory (ROM), a random access memory (RAM), a magnetic or optical disk, etc.

In the specification of the present application, it is to be understood that terms such as "central," "upper," "lower," "vertical," "horizontal," "top," "bottom," "inner," "outer," "axial," "radial," and "circumferential" should be construed to refer to the orientation as then described or as shown in the drawings under discussion. These relative terms are for convenience of description and do not require that the present disclosure be constructed or operated in a particular orientation.

In addition, terms such as "first" and "second" are used herein for purposes of description and are not intended to indicate or imply relative importance or significance or to imply the number of indicated technical features. Thus, the feature defined with "first" and "second" may include one or more of this feature. In the description of the present disclosure, the term "a plurality of' means two or more than two, unless specified otherwise.

In the present application, unless specified or limited otherwise, the terms "mounted," "connected," "coupled," "fixed" and the like are used broadly, and may be, for example, fixed connections, detachable connections, or integral connections; may also be direct connections or indirect connections via intervening structures; may also be inner communications of two elements or interaction of two elements, which can be understood by those skilled in the art according to specific situations.

In the present application, unless specified or limited otherwise, a structure in which a first feature is "on" or "below" a second feature may include an embodiment in which the first feature is in direct contact with the second feature, and may also include an embodiment in which the first feature and the second feature are in indirect contact with each other via an intermediate medium. Furthermore, a first feature "on," "above," or "on top of' a second feature may include an embodiment in which the first feature is right or obliquely "on," "above," or "on top of' the second feature, or just means that the first feature is at a height higher than that of the second feature; while a first feature "below," "under," or "on bottom of' a second feature may include an embodiment in which the first feature is right or obliquely "below," "under," or "on bottom of' the second feature, or just means that the first feature is at a height lower than that of the second feature.

Reference throughout this specification to "an embodiment," "some embodiments," "an example," "a specific example," or "some examples," means that a particular feature, structure, material, or characteristic described in connection with the embodiment or example is included in at least one embodiment or example of the present application. Schematic representations of the above terms throughout this specification are not necessarily referring to the same embodiment or example. Furthermore, the particular features, structures, materials, or characteristics may be combined in any suitable manner in one or more embodiments or examples. In addition, under the condition of not contradicting each other, those skilled in the art can incorporate and combine different embodiments or examples and features of different embodiments or examples described in this specification.

Although embodiments of the present application have been shown and illustrated, it shall be understood by those skilled in the art that: various changes, modifications, alternatives and variants without departing from the principle of the present application are acceptable. The scope of the present application is defined by the claims or the like.

## Claims

1. A detection assembly for a robotic vacuum cleaner, comprising:
a plurality of optical transmitters, one optical receiver and a detection assembly body; the optical transmitters and the optical receiver all being mounted on the detection assembly body; the plurality of optical transmitters, the one optical receiver and the detection assembly body being integrated.

2. The detection assembly according to claim 1, wherein the optical transmitters and the optical receiver each employs a time of flight sensor and/or an optical tracing sensor.

3. The detection assembly according to claim 1 or 2, wherein the plurality of optical transmitters are located on a same horizontal plane, the optical receiver and the optical transmitters are not located on a same horizontal plane, and the optical receiver is located at a middle area between the optical transmitter located at a left extreme position and the optical transmitter located at a right extreme position.

4. The detection assembly according to claim 1, further comprising a plurality of charging alignment devices also integrated on the detection assembly body.

5. The detection assembly according to claim 4, wherein the charging alignment devices and the optical transmitters are not located on a same horizontal plane.

6. The detection assembly according to claim 1, wherein a relative distance between two adjacent optical transmitters is less than 50mm.

7. The detection assembly according to claim 1, wherein a normal angle between two adjacent optical transmitters is greater than 0°and less than 90°.

8. A robotic vacuum cleaner, comprising:
a machine body; and
a walking floor status detection system comprising:
a detection assembly according to any one of claims 1 to 7, the detection assembly being located at a front part of the machine body of the robotic vacuum cleaner;
a detection circuit electrically coupled to an optical receiver, so as to calculate and process an electrical signal of the optical receiver, and to generate an output signal; and
a controller electrically coupled to the optical receiver so as to receive the output signal, and convert the output signal into a spacing value between the detection assembly and an external reflection face.

9. The robotic vacuum cleaner according to claim 8, wherein based on the external reflection face being an obstacle, the controller is configured to determine that the obstacle is present when the spacing value between the detection assembly and the external reflection face falls within a preset threshold range, and determine that the obstacle is not present when the spacing value between the detection assembly and the external reflection face does not fall within the preset threshold range.

10. The robotic vacuum cleaner according to claim 8, wherein based on the external reflection face being a walking floor, the controller is configured to determine that the walking floor is even when a spacing value between the detection assembly and the external reflection face falls within a preset threshold range, and determine that the walking floor is not even when the spacing value between the detection assembly and the external reflection face does not fall within the preset threshold range.

11. The robotic vacuum cleaner according to claim 9 or 10, wherein the controller is configured to send a stop instruction or a turn instruction when the obstacle is present or the walking floor is not even, so as to control the robotic vacuum cleaner to stop moving or turn.

12. The robotic vacuum cleaner according to claim 8, wherein the machine body comprises:
a movable body configured for movement of the robotic vacuum cleaner; and
a protective casing movably mounted on an outer side of the movable body, the protective casing being configured to, under an action of a top obstacle, reduce a distance between the protective casing and a top of the movable body (41) from a first distance to a second distance;
the robotic vacuum cleaner further comprises a first sensing device at least partially located between the movable body and the protective casing, the first sensing device being configured to generate a first detection signal indicating that the top obstacle is detected when the distance between the protective casing and the top of the movable body is reduced from the first distance to the second distance;
the controller is coupled to the first sensing device, the controller being located in the movable body, and being configured to control the movable body to retreat according to the first detection signal.

13. The robotic vacuum cleaner according to claim 12, wherein the first sensing device comprises:
a mechanical switch located between the movable body and the protective casing, the mechanical switch being configured to generate the first detection signal when the distance between the protective casing and the top of the movable body is less than the first distance, and send the first detection signal to the controller.

14. The robotic vacuum cleaner according to claim 12 or 13, wherein
the protective casing is an arc-shaped protective casing, the arc-shaped protective casing at least comprising a first surface and an arc-shaped peripheral surface, the arc-shaped protective casing located at a forward end of the movable body;
the first surface is covered on the top of the movable body;
the arc-shaped peripheral surface is coupled to the first surface, and covered on a side face of the movable body.

15. The robotic vacuum cleaner according to claim 14, wherein the arc-shaped peripheral surface comprises:
a first area located at a first end portion of the arc-shaped peripheral surface;
a second area located at a second end portion of the arc-shaped peripheral surface, wherein the second end portion is an opposite end of the first end portion;
a third area located between the first area and the second area;
wherein the detection assembly is at least partially exposed at an outer side of the third area of the arc-shaped peripheral surface, configured to detect an obstacle ahead.

16. The robotic vacuum cleaner according to claim 15, wherein
a plurality of optical transmitters are located in a first plane, and are configured to transmit a second detection signal of the obstacle ahead;
at least one optical receiver is located in a second plane, and is configured to receive a feedback signal returned by the obstacle ahead where the second detection signal is acted on; wherein the second plane is parallel to the first plane.

17. The robotic vacuum cleaner according to claim 16, wherein the detection assembly further comprises:
at least two charging alignment devices exposed through the arc-shaped peripheral surface of the protective casing, the at least two charging alignment devices being located in a third plane, wherein the third plane is parallel to the first plane and the second plane.

18. The robotic vacuum cleaner according to claim 16, wherein
the at least two optical transmitters are configured to successively transmit the second detection signal according to a rotational sequence;
the controller is specifically configured to determine a parameter of the obstacle ahead according to the feedback signal submitted by the at least one optical transmitter and according to the optical transmitter whose second detection signal corresponds to the feedback signal, and the controller is specifically configured to control the robotic vacuum cleaner to move forward according to the parameter of the obstacle ahead.

19. The robotic vacuum cleaner according to claim 18, wherein the parameter of the obstacle ahead comprises at least one of:
an indication parameter indicating whether there is an obstacle within a predetermined distance ahead;
a distance of the obstacle ahead relative to the robotic vacuum cleaner; and
an angle of the obstacle ahead relative to the robotic vacuum cleaner;
and/or,
the controller is specifically configured to adjust a forward direction and/or a forward speed of the robotic vacuum cleaner according to the parameter of the obstacle ahead.

20. A method for detecting a walking floor status of a robotic vacuum cleaner, the robotic vacuum cleaner being a robotic vacuum cleaner according to any one of claims 8-19, and the method comprising:
transmitting test light towards the external reflection face;
receiving light reflected by the external reflection face, and converting a light intensity signal of the light into an electrical signal;
calculating and processing the electrical signal, and sending an output signal; and
converting the output signal into a spacing value between the detection assembly and the external reflection face, and determining positional information of the external reflection face according to whether the spacing value falls within a preset threshold range.

21. A method for controlling a robotic vacuum cleaner, the robotic vacuum cleaner being a robotic vacuum cleaner according to any one of claims 8-19, and the method comprising:
when a protective casing of the robotic vacuum cleaner is under an action of a top obstacle, and in a process that a distance between the protective casing of the robotic vacuum cleaner and a top of the movable body of the robotic vacuum cleaner is reduced from a first distance to a second distance, a first sensing device, at least partially located at the protective casing and the top of the movable body, generating a first detection signal indicating that the top obstacle is detected; and
controlling the robotic vacuum cleaner to retreat according to the first detection signal.

22. The method according to claim 21, further comprising:
using the detection assembly, exposed on an arc-shaped peripheral surface of the protective casing of the robotic vacuum cleaner, to transmit a second detection signal for detection of an obstacle ahead;
using the detection assembly to receive a feedback signal returned based on the second detection signal;
determining a parameter of the obstacle ahead based on the second detection signal and the feedback signal; and
controlling the robotic vacuum cleaner to move forward according to the parameter of the obstacle ahead.

23. The method according to claim 22, wherein the step of using the detection assembly, exposed on an arc-shaped peripheral surface of the protective casing of the robotic vacuum cleaner, to transmit a second detection signal for detection of an obstacle ahead comprises:
utilizing a circuit to successively transmit the second detection signal according to a rotational sequence with at least two transmitters on the arc-shaped peripheral surface of the robotic vacuum cleaner;
the step of determining a parameter of the obstacle ahead based on the second detection signal and the feedback signal comprises:
determining the parameter of the obstacle ahead according to the feedback signal submitted by the at least one transmitter and the transmitter whose second detection signal corresponds to the feedback signal.
